# EUROPEAN PATENT APPLICATION

(11) **EP 1 367 480 A1**
(43) Date of publication of application: **03.12.2003**
(21) Application number: 02011941.8
(22) Date of filing: 29.05.2002
(51) Int. Cl.: G06F 1/32

(54) **Portable computer capable of setting a data keeping time**

(71) Applicant: AboCom Systems, Inc., Hsinchu City, Taiwan (TW)
(72) Inventor: Lee, Mu-Sen, Chiao-Tou Hsiang, Kao Hsiung Hsien (TW)
(74) Representative: Weber, Joachim, Dr.

(57) **Abstract**

A portable web pad includes a battery for supplying power to the portable web pad, a memory unit for storing data of the portable web pad, a user interface for inputting a data keeping time which represents a period of time for keeping the data in the memory unit, and a control unit for controlling the battery according to the data keeping time. When the control unit detects residual power of the battery to be less than power required for keeping the data in the memory unit during the data keeping time, the control unit controls the portable web pad to do a predetermined action.

## Description

### BACKGROUND OF THE INVENTION

### 1. Field of the Invention

The invention relates to a portable web pad, and more particularly, to a portable web pad capable of setting a data keeping time.

### 2. Description of the Prior Art

A web pad is a simplified portable computer that help a user to connect to the Internet anywhere and anytime. Generally, the web pad is designed to have a flat shape and be pocket sized for portability. With the prevalence of the Internet, the web pad has gained substantial interest as the best solution for acquiring data from the Internet whenever needed.

Since the portable web pad is desired to be lightweight and thin, a dynamic random access memory (DRAM) module is utilized in the portable web pad to replace a hard disk used in a conventional computer so as to save space of the portable web pad. Nevertheless, when a battery of the portable web pad runs down, data stored in the DRAM disappears. Therefore, the portable web pad is required to supply power continuously to keep the data.

For solving the above-mentioned problem, a conventional solution is to set a reserved power when manufacturing the portable web pad. Once residual power of the portable web pad is less than the reserved power, the portable web pad shuts down automatically so as to keep the data in the memory by using the residual power.

However, several disadvantages still arise in the prior art portable web pad. First, since the reserved power is set before leaving the factory, it cannot be adjusted according to a user's requirement. When the set reserved power does not meet the user's requirements, data stored in the portable web pad is inevitably eliminated when time needed for shutting down is longer than a remaining duration of the set reserved power. Additionally, with this prior art design, a user cannot estimate the remaining duration of the reserved power, thus the data stored in the prior art portable web pad is easily . lost or damaged unexpectedly. Consequently, the utilization of the portable web pad is strictly restricted.

### SUMMARY OF THE INVENTION

It is therefore a primary objective of the claimed invention to provide a portable web pad capable of setting a data keeping time to solve the above-mentioned problem.

According to the claimed invention, the portable web pad comprises a battery for supplying power to the portable web pad, a memory unit for storing data of the portable web pad, a user interface for inputting a data keeping time which represents a period of time for keeping the data in the memory unit, and a control unit for controlling the battery according to the data keeping time. When the control unit detects residual power of the battery to be less than power required for keeping the data in the memory unit during the data keeping time, the control unit controls the portable web pad to do a predetermined action.

It is an advantage of the claimed invention that the portable web pad is capable of setting a data keeping time to overcome the prior art shortcomings.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

Fig. 1 is a perspective view of a portable web pad according to a first embodiment of the present invention.
Fig.2 is a function block diagram of the portable web pad shown in Fig.1.
Fig. 3 is a dialogue block of a user interface shown in Fig.2.
Fig.4 is a flow chart illustrating power control of the portable web pad shown in Fig.1.
Fig.5 is a dialogue block of a user interface according to an alternative embodiment of the present invention.
Fig.6 is a flow chart illustrating power control of the portable web pad according to the embodiment shown in Fig.5.

### DETAILED DESCRIPTION OF THE PREFERRED EMBODIMENT

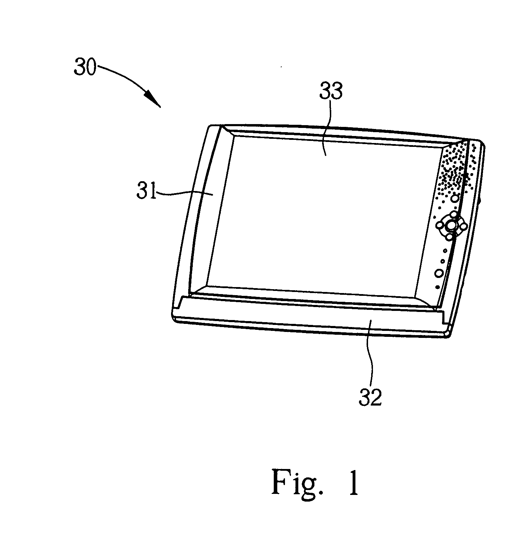

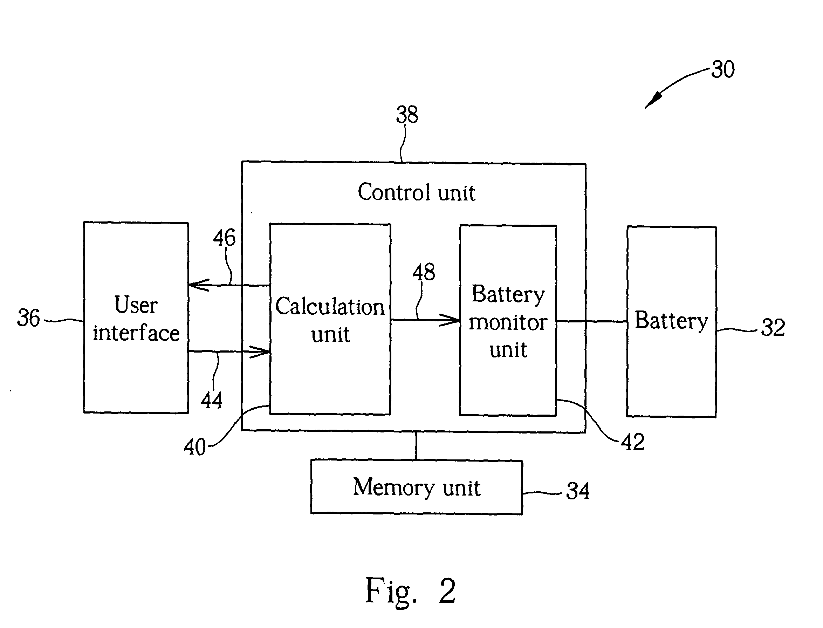

Please refer to Figs.1 and 2. Fig.1 is a perspective view of a portable web pad 30 according to a first embodiment of the present invention. Fig.2 is a function block diagram of the portable web pad 30 shown in Fig.1. The portable web pad 30 comprises a housing 31, a display panel 33 installed on the housing 31 for displaying data, a battery 32 which connects to the housing 31 for supplying power to the portable web pad 30, a memory unit 34 installed inside the housing 31 for storing the data of the portable web pad 30, and a control unit 38 for controlling the portable web pad 30. The display panel 33 can display a user interface 36 to operate the portable web pad 30. The memory unit 34 is a dynamic random access memory (DRAM) module. In the first embodiment of the present invention, the user interface 36 is used to input a data keeping time 44, which represents a period of time for keeping the data in the memory unit 34. Thereafter, the control unit 38 controls the battery 32 according to the data keeping time 44 so as to adjust the period of time for keeping the stored data in the portable web pad 30.

As shown in Fig. 2, the control unit 38 comprises a calculation unit 40 and a battery monitor unit 42. The calculation unit 40 of this embodiment has two functions. First, the calculation unit 40 uses the data keeping time 44 to calculate a reserved power ratio 46, and then displays the reserved power ratio 46 on the user interface 36. The reserved power ratio 46 represents a ratio of the reserved power, which is required by the portable web pad 30 to keep the data during the data keeping time 44, to a whole power stored in the battery. The reserved power ratio may be 15%, 20%, and so forth. Second, the calculation unit 40 also uses the data keeping time 44 to calculate a reserved power adjusting command 48 for controlling the battery 32 . The battery monitor unit 42 monitors the battery 32 according to the reserved power adjusting command 48. When the residual power of the battery 32 is less than the power required for keeping the data in the memory unit 34 during the data keeping time 44, the control unit 38 controls the portable web pad 30 to display a message on the user interface 36, thereby suggesting the user should shut down the portable web pad 30.

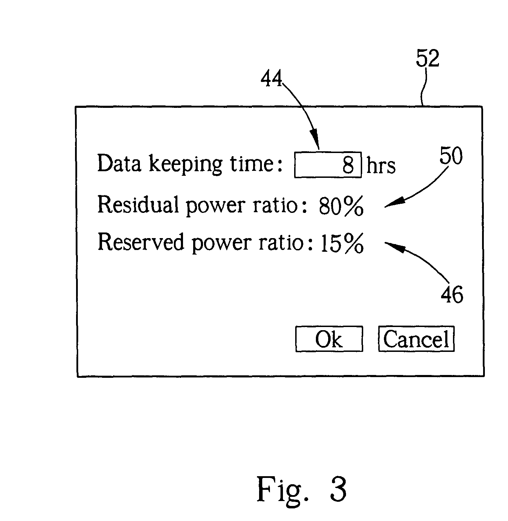

Please refer to Fig.3. Fig.3 is a dialogue block 52 of the user interface 36 shown in Fig.2. The dialogue block 52 can pop up for inputting the data keeping time 44 according to the user's requirement. After inputting the data keeping time 44, the dialogue block 52 displays the corresponding reserved power ratio 46. Additionally, the dialogue block 52 may also display related information, such as a residual power ratio 50, to be used as reference.

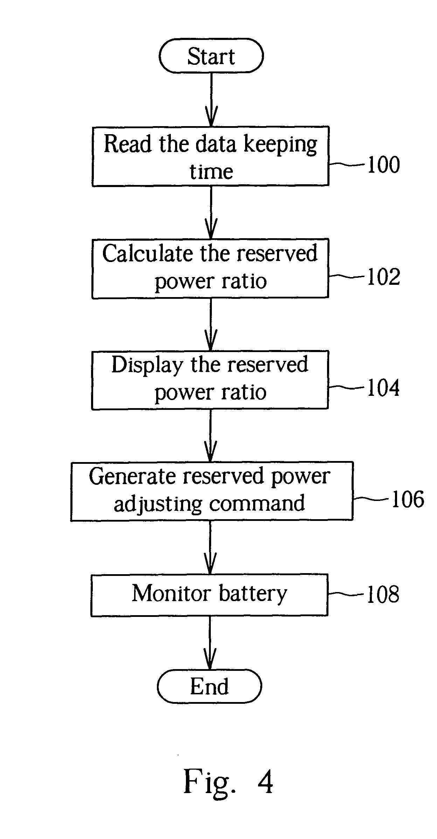

Please refer to Fig.4. Fig.4 is a flow chart illustrating power control of the portable web pad 30 shown in Fig.1. This flow chart is described below:
- step 100:: read the data keeping time 44 from the user interface 36;
- step 102:: use the data keeping time 44 to calculate the reserved power ratio 46 (reserved power ratio = data keeping time x P, where P is a transferring coefficient explained below);
- step 104:: display the reserved power ratio 46 on the user interface 36 for confirmation;
- step 106:: use the data keeping time 44 or the reserved power ratio 46 to calculate the reserved power adjusting command 48, and send this to the battery monitor unit 42;
- step 108:: monitor the battery 32 according to the reserved power adjusting command 48, when the control unit 38 detects that the residual power of the battery 32 is less than the power required for keeping the data in the memory unit 34 during the data keeping time 44, the control unit 38 controls the portable web pad 30 to pop up a message on the user interface 36 so as to warn the user.

Generally, since the memory unit 34 is composed of dynamic random access memory (DRAM), the time for keeping data is proportional to the power required. Thus, a specific proportional relation exists between the data keeping time 44 and the reserved power ratio 46, and the equation is : reserved power ratio = data keeping time x P. The P value represents a transferring coefficient depending on circuits of the portable web pad and the performance of the battery. Typically, the P value is acquired through experiments or referring to the specifications of the circuits and the battery.

Furthermore, the flow chart for controlling power of the present invention is not restricted to the above-mentioned method. For example, steps 102 and 104 for calculating and displaying the reserved power ratio 46 can be omitted or be postponed until after step 106. Additionally, the method of warning the user is also not restricted to popping up the message on the user interface 36. The control unit 38 can adopt other methods, such as sending out a sound, to achieve the same effect. Actually, any method for controlling the residual power of the battery 32 through inputting or displaying the data keeping time 44 is within the spirit of the present invention.

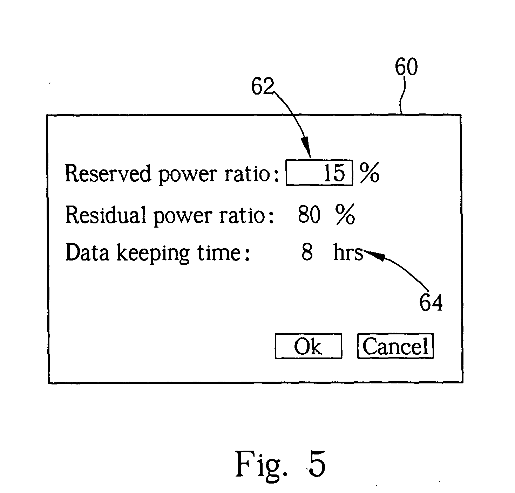

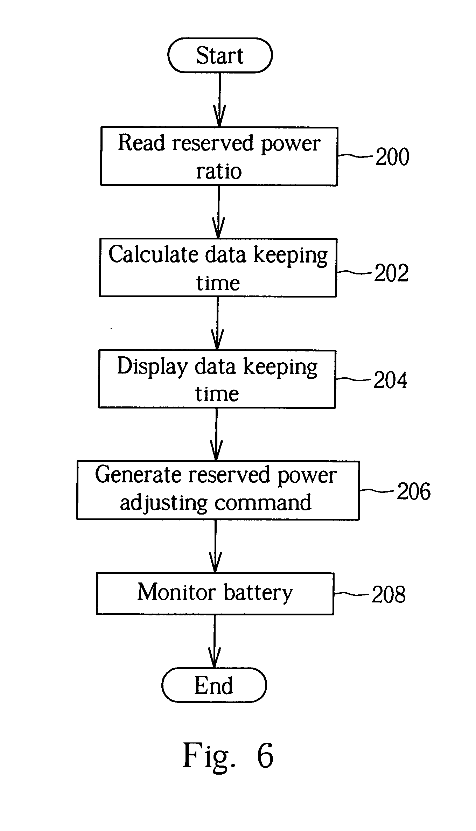

Please refer to Figs.5 and 6. Fig.5 is a dialogue block 60 of the user interface 36 according to an alternative embodiment of the present invention. Fig.6 is a flow chart illustrating power control of the portable web pad 30 according to the embodiment shown in Fig.5. Differing from the first embodiment 52, the dialogue block 60 is popped up to input the reserved power ratio 62 first. After inputting the reserved power ratio 62, the dialogue block 60 displays the corresponding data keeping time 64 to be confirmed. After confirming, the control unit 38 monitors the battery 32 according to the reserved power ratio 62 and the data keeping time 64.

As shown in Fig.6, the flow chart for controlling power according to this embodiment is described below:
- step 200:: read the reserved power ratio 62 from the user interface 36;
- step 202:: use the reserved power ratio 62 to calculate the data keepingtime 64 (data keeping time = reserved power ratio x (1/P));
- step 204:: display the data keeping time 64 on the user interface 36 for confirmation;
- step 206:: use the data keeping time 64 or the reserved power ratio 62 to calculate the reserved power adjusting command, and send this to the battery monitor unit 42;
- step 208:: monitor the battery 32 according to the reserved power adjusting command, when the control unit 38 detects the residual power of the battery 32 to be less than the power required for keeping the data in the memory unit 34 during the data keeping time 64, the control unit 38 controls the portable web pad 30 to pop up a message on the user interface 36 so as to warn the user.

According to the above-mentioned steps, the user can achieve the purpose of adjusting the data keeping time 64 through inputting the reserved power ratio 62.

In contrast to the prior art, the portable web pad according to the present invention provides a function of displaying and setting a data keeping time to reduce the risk of losing data unexpectedly. A user can estimate the data keeping time according to the user's requirement, such as the desired time for recharging the run-down battery, and the like. Therefore, the user interface of the portable web pad according to the present invention is more friendly and convenient for use.

Those skilled in the art will readily observe that numerous modifications and alterations of the device may be made while retaining the teachings of the invention. Accordingly, the above disclosure should be construed as limited only by the metes and bounds of the appended claims.

## Claims

1. A portable web pad comprising:
a battery for supplying power to the portable web pad;
a memory unit for storing data of the portable web pad;
a user interface for inputting a data keeping time which represents a period of time for keeping the data in the memory unit; and
a control unit for controlling the battery according to the data keeping time;
wherein when the control unit detects residual power of the battery to be less than power required for keeping the data in the memory unit during the data keeping time, the control unit controls the portable web pad to do a predetermined action.

2. The portable web pad of claim 1 wherein the control unit comprises a calculation unit for transferring the data keeping time into a reserved power adjusting command for controlling the battery.

3. The portable web pad of claim 2 wherein the control unit further comprises a battery monitor unit for controlling the battery according to the reserved power adjusting command, when the residual power of the battery is less than the power required for keeping the data in the memory unit during the data keeping time, the control unit controls the portable web pad to do a predetermined action.

4. The portable web pad of claim 1 wherein the control unit comprises a calculation unit for transferring the data keeping time into a reserved power ratio, and then displays the reserved power ratio on the user interface.

5. The portable web pad of claim 4 wherein the calculation unit transfers the reserved power ratio into a reserved power adjusting command for controlling the battery.

6. The portable web pad of claim 1 wherein the predetermined action is displaying a message on the user interface.

7. The portable web pad of claim 1 wherein the memory unit is a dynamic random access memory (DRAM) module.

8. A portable web pad comprising:
a battery for supplying power to the portable web pad;
a memory unit for storing data of the portable web pad;
a user interface for inputting a reserved power ratio which represents a ratio for reserving power in the battery; and
a control unit for controlling the battery according to the reserved power ratio;
wherein the control unit transfers the reserved power ratio into a data keeping time and then displays the data keeping time on the user interface, the data keeping time represents a period of time corresponding to the reserved power ratio for keeping the data in the memory unit, when the control unit detects residual power of the battery to be less than the reserved power ratio, the control unit controls the portable web pad to do a predetermined action.

9. The portable web pad of claim 8 wherein the control unit comprises a calculation unit for transferring the reserved power ratio into a reserved power adjusting command for controlling the battery.

10. The portable web pad of claim 9 wherein the control unit further comprises a battery monitor unit for controlling the battery according to the reserved power adjusting command, when the residual power of the battery is less than the reserved power ratio, the control unit controls the portable web pad to do a predetermined action.

11. The portable web pad of claim 8 wherein the control unit comprises a calculation unit for transferring the reserved power ratio into the data keeping time, and then displays the data keeping time on the user interface.

12. The portable web pad of claim 11 wherein the calculation unit transfers the data keeping time into a reserved power adjusting command for controlling the battery.

13. The portable web pad of claim 8 wherein the predetermined action is displaying a message on the user interface.

14. The portable web pad of claim 8 wherein the memory unit is a dynamic random access memory (DRAM) module.
